# EUROPEAN PATENT SPECIFICATION

(11) **EP 0 859 438 B1**
(45) Date of publication and mention of the grant of the patent: **22.09.2004**
(21) Application number: 97204037.2
(22) Date of filing: 19.12.1997
(51) Int. Cl.: H02B 1/00, H02B 1/21, H02B 1/056

(54) **Low-voltage electrical distribution board**
Niederspannungsverteiler
Système de distribution électrique à basse tension

(43) Date of publication of application: 19.08.1998
(73) Proprietor: ABB Sace SpA, 20137 Milano (IT)
(72) Inventor: Dosmo, Renato, I-24030 Brembate di Sopra (BG) (IT); Giupponi, Gianpietro, I-24123 Bergamo (IT)
(74) Representative: Giavarini, Francesco

(56) References cited:
- WO-A-91/01583
- DE-A- 19 511 044
- GB-A- 2 082 783
- US-A- 4 472 761
- US-A- 4 752 233

## Description

The present invention relates to a low-voltage electrical distribution board.

In known boards of the type in question the distribution bars are insulated and supported on an intermediate supporting panel and support the main switch and whatever consumer switches are provided via the interposition of branch bars which pass through an interposed insulating panel. The outward cables from the consumer switches are guided towards one or both sides of the cabinet and, wired in the manner of an upright, are then conducted to the individual consumers.

The front part of the board, lying between the bars and the door of the cabinet, is therefore insulated so as to exclude accidental contacts with live parts when the door of the board is open, by means of the aforementioned interposed insulating panel. Therefore each individual cabinet is on each occasion made as a "bespoke" cabinet, i.e. dependent on the number and dimensions, i.e. construction, of switches required. Hence, known boards do not allow efficient quantity production, nor subsequent extensions and/or modifications, for example of the consumer circuits, or replacements of the installed switches by other switches of different rating; moreover they are complicated and expensive to manufacture and wire. This likewise makes it difficult and expensive to keep a stock of the cabinets and their components.

Also known are boards of the type indicated which provide for removable fixing of the consumer switches. Coupling is by so-called "tulip" plug-in parts. This solution does indeed allow rapid replacement of a switch without interrupting the supply to the other consumers. However, only replacement between switches of the same type, i.e. construction, is possible.

A board with the features of the preamble of Claim 1 is known from WO 91 01583 A.

The technical goal of the present invention is to create a board of the type indicated, which makes it possible to avoid the drawbacks of the prior art boards and allows subsequent modification or integration of the board, and does so even with switches of different dimensions or construction, and makes it possible to simplify the construction of the board and the realisation of the wiring, and also to reduce the bulkiness of the board as compared with known boards having the same number of consumer switches.

This goal is achieved, according to the invention, with a board which exhibits the characteristics of Claim 1.

The advantages which are obtained with the invention are in particular the fact that for the first time it provides the flexibility of conversion or integration of the board, or of the consumer circuits, without any need to replace the board in full.

A further important advantage of the invention will be seen in the fact that the releasable coupling tags of the proposed switch/support adapter units render the known branch bars superfluous and allow direct releasable coupling when required between switches and distribution bars.

The novel possibility of placing the switch/support adapter units at points of the insulating panel as desired and of varying these positions as desired even after making the board, is easily obtainable with the characteristics indicated in Claim 2.

Efficient production of the insulating panel and simple fixing of the switch/support adapter units are achieved, together with optimal exploitation of the space inside the cabinet, by utilizing the characteristics indicated in Claim 3.

Simple, rapid and reliable releasable connection is obtained between the poles of the switches and the tags of the adapters by adopting the expedient indicated in Claim 4.

The switch/support adapter units can be reliably and rapidly fitted to the corresponding distribution bars by advantageously providing the characteristics indicated in Claim 5.

Convenient and easy handling of the switch/adapter units is achieved by providing grips as indicated in Claims 6 and 7.

It is possible to retain convenient handling of the switch/adapter units and at the same time to reduce the bulkiness of the insulating panel and, consequently, of the entire board, as well as the costs of manufacturing the adapters, by adopting the characteristics indicated in Claims 8 and 9.

Inappropriate withdrawal of the switch/adapter units from the board during the operational state is excluded with safety by adopting the characteristics indicated in Claim 10.

Further details and advantages of the invention may be seen in the following description of an example of an embodiment illustrated in the appended drawings in which are shown diagrammatically:
Figure 1 shows a front view on a board according to the invention, with door omitted.
Figure 2 shows a view in vertical elevation of the board of Figure 1 with parts sectioned;
Figure 3 shows a transverse section on the line III-III of Figure 1, without the outline of the cabinet;
Figure 4 shows a plan view of a consumer switch/support adapter unit with a few details sectioned;
Figure 5 shows a perspective view of an interposed insulating panel unit and rear support panel with a consumer switch/support adapter unit fitted and a similar unit before mounting, partially exploded;
Figure 6 shows an exploded perspective view of a consumer switch/support adapter unit;
Figure 7 shows in perspective a consumer switch/support adapter unit with associated removable grip;
Figure 8 shows a view on the support adapter switch side;
Figure 9 shows a plan view of a consumer switch/basic adapter unit, with detail A of central fixing to the support panel;

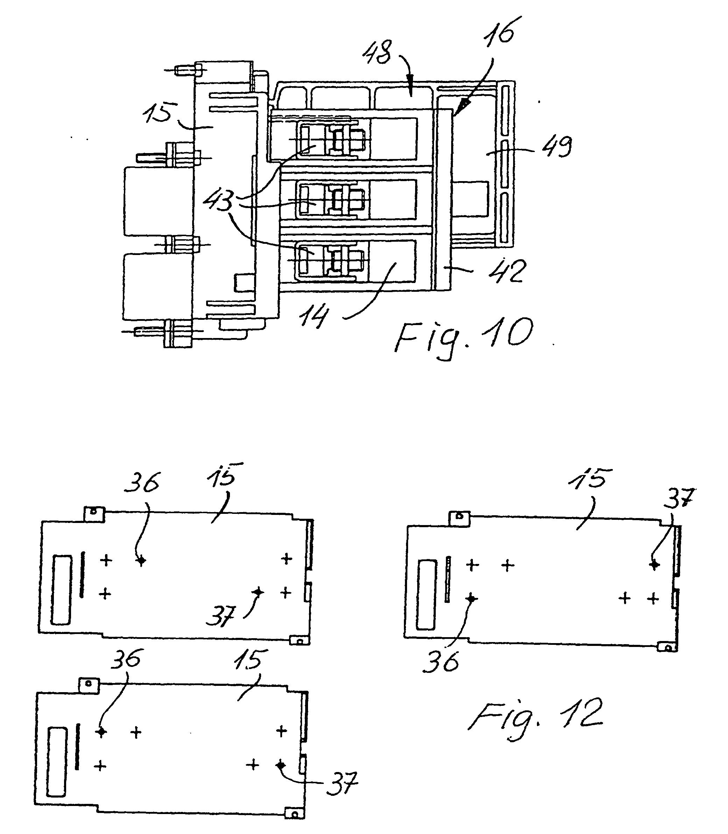

Figure 10 shows a view in side elevation of the switch/adapter unit of Figure 9 along the arrow F;
Figure 11 shows the detail A of Figure 9 on an enlarged scale; and
Figure 12 shows three modular support adapters with three different schemes for fixing the corresponding switches.

In the various figures identical parts have identical reference indices.

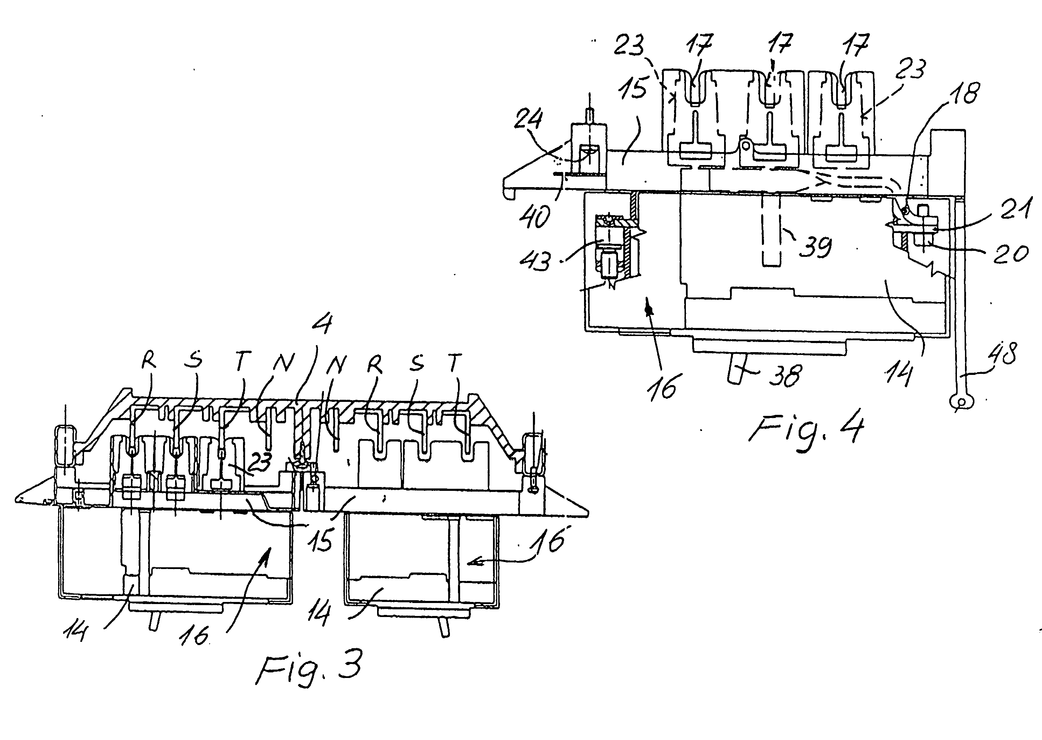

The low-voltage electrical distribution board is labelled 1 overall. It comprises a body or metal structure 2 with an access door, not illustrated. The distribution bars are labelled as customary R, S, T, N, where N labels the neutral conductor. In the example illustrated two groups of distribution bars are provided and are supported firmly in a back panel 4 of insulating material, for example synthetic material (Figure 3), in any suitable way. The insulating panel 4 is fixed, in a manner not illustrated, to a carrying frame 5 which involves substantially the full height of the board 1 and is fixed firmly thereto, for example by screws, not illustrated. The main switch inserted onto the distribution bars is labelled 7 and is fixed with screws 8 to an insulating panel 9, said panel 9 being with screws 10 to the carrying frame 5. An insulating panel 12 (as shown in Figure 5) having a plurality of openings 13 which likewise can be fixed to the carrying frame 5, in the example illustrated by screws, is provided for insulation between the consumer switches and the bars.

According to the invention the consumer switches 14, for example three-poled with neutral, are fitted with their own support adapter 15 in a releasable manner and each forms a switch/support unit 16. According to the invention the support adapters 15 constitute a mechanical interface for removable modular connection between switch and adapter, on one side, and between adapter and insulating panel, and also distribution bars, on the other side, as discussed below.

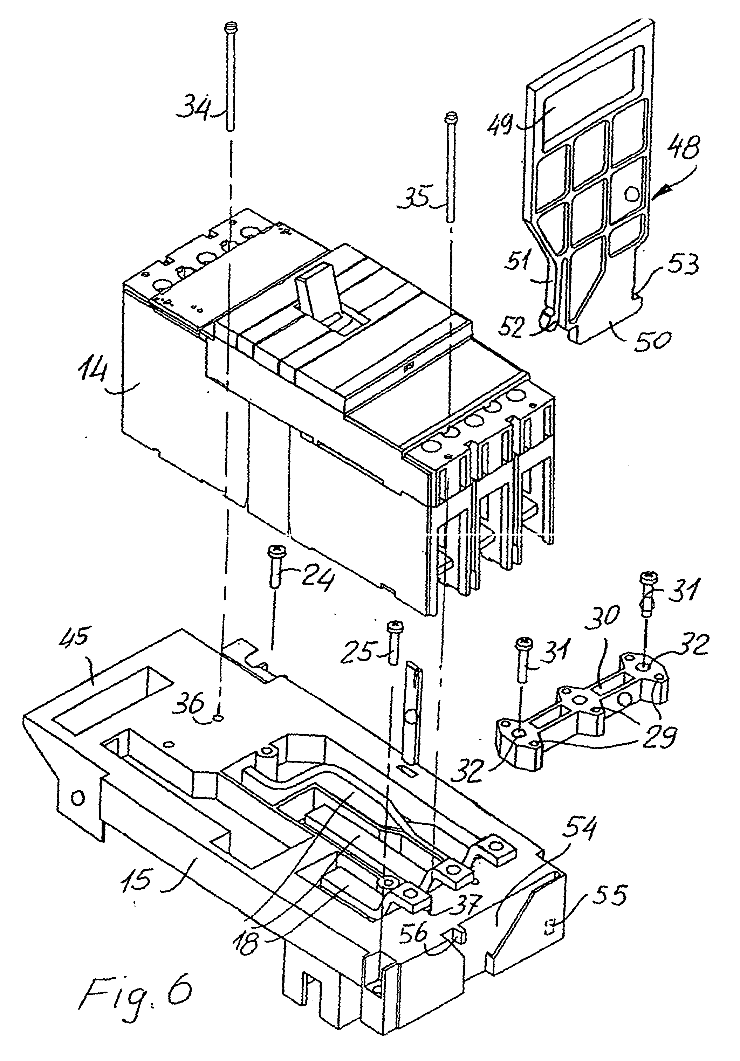

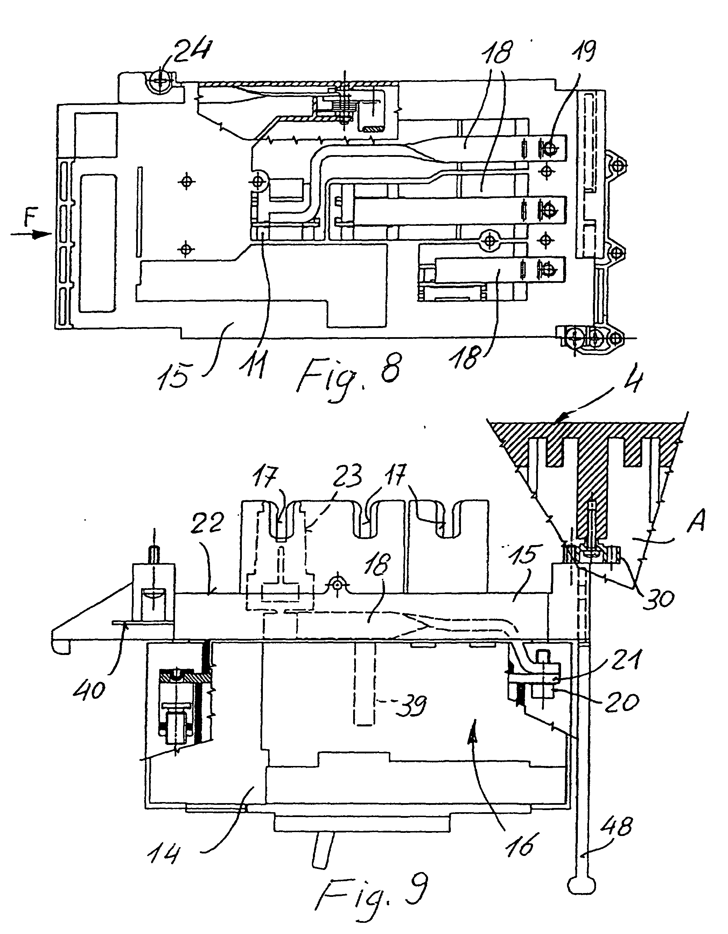

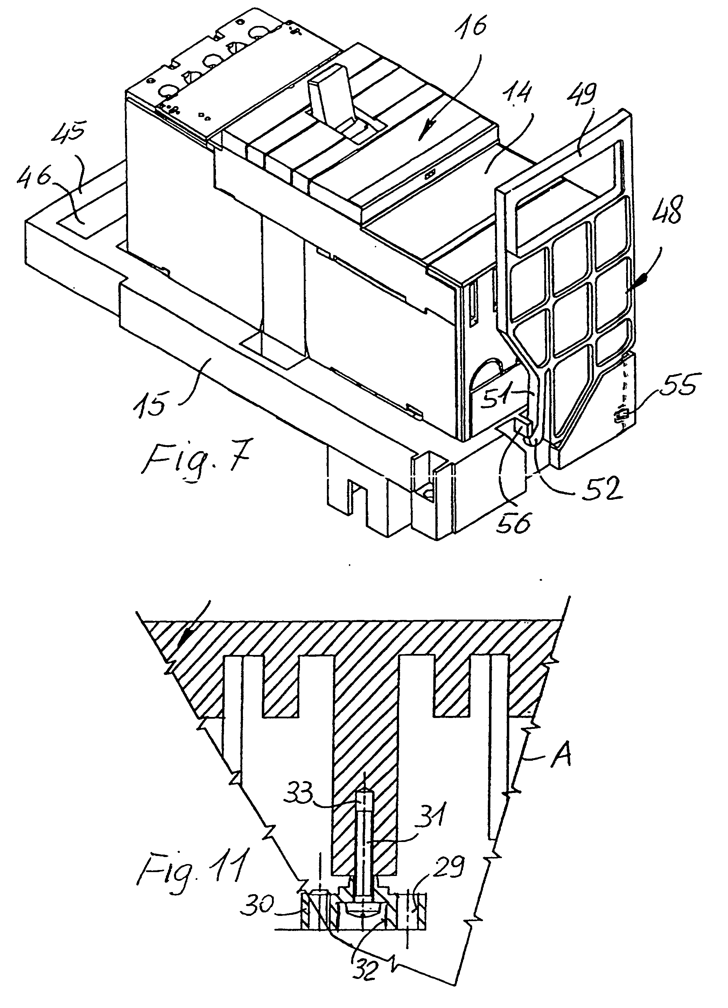

According to an important aspect of the invention the known branch bars are thus eliminated. Their function is performed by connection tags 18, one for each pole of the switch and for the neutral conductor. These tags 18 have a hole 19 at one end for fixing them, by a screw 20, to an end 21 of a phase or neutral conductor of the switch. Each tag 18 then extends and is fixed in suitable cavities or housings for example 11,as shown in Figure 8, in the adapter 15 and then emerges from the adapter on the side 22 facing the insulating fixing panel 12. The protruding ends 23 of the tags 18 have means 17 of releasable coupling to the corresponding distribution bar. As may be seen in Figure 9, the protruding ends 23 are housed in a covering shell of synthetic material, made as a single piece with the said adapter. In the example illustrated, these coupling means 17 consist of a clamp-like or groove-like configuration 17 allowing engagement with geometrical uniting of the male and female type with the associated distribution bar. In substance a generally male and female coupling is provided between the distribution bar and the coupling end 23 of the tag. An alternative to these coupling means could be made with one end of the tongue curled up in the manner of a hollow plug and by corresponding slots provided in the bars (which is not illustrated). Obviously the length of the protruding end 23 will be such as to make possible in a satisfactory manner the coupling illustrated when the switch/adapter unit 16 is fixed to the support panel 4. This fixing is carried out by means of the screws 24, 25, as shown in Figures 5, 6, the screw 24 being screwed into one of the holes 27 provided in the end rail 28 and the screw 25 screwed into one of the holes 29 provided on the two sides of a corresponding fixing insert 30. The use of the inserts 30, in the example illustrated for example as a profiled strip, makes it possible to simplify the production of the panel 12, nonetheless allowing the compact layout of two adjacent and horizontally abutting switch/support adapter units 16. The fixing of the inserts 30 to the centreline of the panel 4, at whichever, height may be necessary, is carried out by means of two screws 31, which pass through corresponding holes 32 in the insert 30 and can be screwed respectively into one of a plurality of holes 33 (Figure 11) distributed over the vertical centreline of the panel 4.

The fixing of the consumer switch 14 to its fixing adapter 15 is carried out by means of two respective screws 34, 35, which can be screwed into a respective hole 36, 37, as shown in Figures 6, 12. As may be seen in Figure 12, a plurality of fixing holes 36, 37, in the example three holes, is provided in the adapters 15. The said holes are arranged as a modular reticle which allows the fixing of switches of differing dimensions, or ratings.

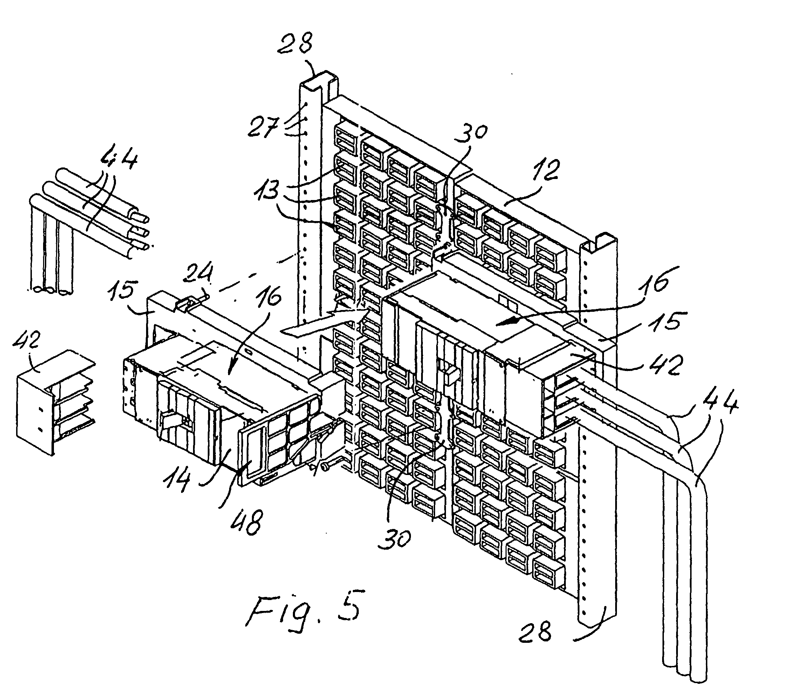

It is also known that in electrical switches there is sometimes a requirement to prevent the removal of the switch with its contacts closed. For this purpose various mechanisms are known which connect the control lever 38 of the switch with an internal sliding rod 39, as illustrated in Figures 4 and 9. According to the invention suchlike mechanisms are advantageously used to prevent inappropriate removal of the switch/adapter unit 16 from the live board. For this purpose a diaphragm 40 is articulated to the sliding rod 39 and is supported so that it can translate longitudinally in the body of the adapter 15 between a rest position, Figure 8, i.e. with switch open, in which the free end of the diaphragm uncovers a screw, for example 24, for fixing, the switch/adapter unit 16 to the insulated panel 12, and an active position (Figure 4), i.e. with switch closed, in which the said free end of the diaphragm 40 blocks access to the aforementioned fastening screw 24.

In Figures 5, 9 the reference 42 indicates a lug cover which can be fitted, for example by snap-action, to the body of the switch 14 so as to encapsulate the lugs 43 fixing the conductors 44 exiting towards the consumers, not illustrated.

To facilitate handling or operations of fitting/removing the switch/adapter units 16, according to the invention the adapters 15 are furnished with at least one grip 45. As illustrated, this grip is integral and has a suitable cavity 46, on the narrow front side facing outwards from the panel 12 in the assembled state. To further facilitate such handling a second grip 48 is provided on the intemal front side of the adapter 15. As illustrated, the internal grip 48 is configured so as to be removable. In the example illustrated, the grip 48 has a plate-like configuration with an upper grip proper 49 and a coupleable lower end 50. In the coupleable end 50 is provided, on one side, a springy longitudinal arm 51 with an engagement tooth 52 and, on the opposite side, an indentation 53. Moreover, a corresponding coupling seat with pocket 54 able to house the coupling end 52 is provided in the adapter, and has, correspondingly, a projection 55 and a catch 56 respectively co-operating with the cavity 52 and the tooth 56 of the springy arm 51 of the grip 48. It will easily be understood that the engagement for plugging in and unplugging the grip 48 will be carried out by geometrical coupling of mating between the cavity 53 and the projection 55 and elastic engagement between the tooth 52 and the catch 56, while the tooth 52 is able to engage elastically beneath the catch 56 so as to allow the unit 16 to be handled. Disengagement is carried out simply by pressing the arm 51 in towards the grip 48, i.e. in such a way as to disengage the tooth 52 from the catch 56. This is easily carried out by using a screwdriver, or the like. Coupling, on the other hand, is carried out simply, in an automatic manner, by pushing the grip into the pocket seat 54.

In Figure 12 the seats 36, 37 for housing the two screws 34, 35 for fixing the switch 14 to its adapter 15 are indicated by roundels.

Three different positionings of the said fixing screws may be seen in these three diagrams, as required for example by switches of different dimensions, or constructions. This exemplary illustration shows just a few of the possible variants for fixing switches practically wherever desired, or of already existing standard series, as for example products from the applicant.

For completeness of description it is pointed out that the panel 12 is fixable directly to the panel 4, for example by means of screws passing through holes in the uprights 28, said panel 4 being fixed to the support frame 5.

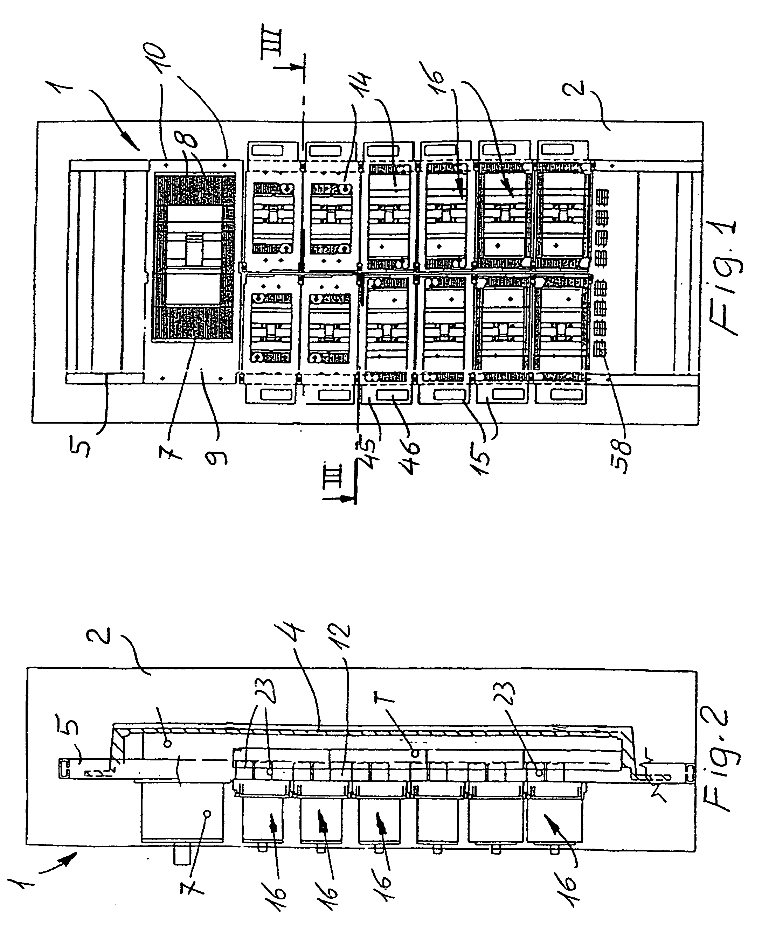

Furthermore, in Figure 1 the label 58 indicates protrusions for positioning and locking the distribution bars R, S, T, N. The procedure for making the distribution cabinets and for fitting the switch/adapter units according to the invention is as follows.

Having established the circuit for the consumers and the corresponding number and type of switches, the appropriate switch/adapter units 16 will firstly be prepared and the insulating panel 12 with modular openings 13, as well as the panel 4 for supporting the distribution bars and the corresponding rigging frame 5 will be chosen correspondingly. The size of the cabinet 1 will thus be established on the basis of the space required by a rig as illustrated for example in Figure 1.

On account of the reticle-like distribution with modular layout of the through openings 13 in the panel 12 it will certainly be possible to obtain an extremely compact layout of the consumer switches 14, i.e. of the switch/adapter units 16, regardless of what individual switches were chosen for each use.

This is possible because of the use of the modular units 16 according to the invention. Fitting of the novel switch/adapter units 16 is extremely simple, rapid and reliable by virtue of the couplings with geometrical uniting and the rigidity of the coupling tags.

Removal of the novel switch/adapter units is likewise simple and rapid, this operation requiring the simple loosening of a few screws.

From the foregoing it will easily be understood that the wiring too can be realized extremely simply and rapidly and does not hamper or complicate any subsequent operations of integration or modification of the consumer circuits, for, as compared with the known solutions the boards or cabinets according to the invention make it possible easily to provide for such later integrations or modifications without wholesale replacement of the cabinet or lengthy, complicated and expensive adaptation work.

The novel concept of flexibility adapted to the boards and cabinets according to the invention therefore constitutes an important aspect of the invention which contributes to the achieving of the advantages indicated earlier.

The dimensions and materials, as well as the fixing systems, may be selected on occasion according to the requirements of the specific case as illustrated, or else by employing their technical equivalents.

## Claims

1. Low-voltage electrical distribution board comprising, in a board body (2), a main switch (7), distribution bars (R, S, T, N) insulated and supported in a support panel (4), and consumer switches (14), wherein
associated with the support panel (4) is an insulating panel (12) having a plurality of openings (13) for passing the terminals of the consumer switches (14) through to the distribution bars (R, S, T, N), while the said support panel (4) has means (27, 28, 33) for fixing the switches (14), **characterized in that**:
associated individually with the consumer switches (14) is a support adapter (15), each thereby forming a switch/adapter unit (16),
and **in that** in the adapters (15) there is provided, for each pole (R, S, T, N) of the switch (14), an electrically conducting connection tag (18) which can be connected, at one end, to a pole (R, S, T, N) of the switch (14), is conducted through the body of the adapter (15) and subsequently out onto the other side (22) away from the switch (14) and terminates in means of releasable coupling (17) to a respective distribution bar (R, S, T, N).

2. Board according to Claim 1, **characterized in that** the openings (13) provided in the insulating panel (12) are distributed in the manner of a reticle with a modular layout.

3. Board according to Claim 1, **characterized in that** the fixing means (27, 28, 33) for the switch/adapter units (16) consist of two series of vertical holes (27) provided in lateral uprights (28) and of a series of holes (33) provided in the vertical centreline of the insulating support panel (4), while inserts (30) for supporting the switch/adapter units (16) are preliminarily fixable into the said central holes (33).

4. Board according to Claim 1, **characterized in that** the connection between the tags (18) of the adapters (15) and the respective poles (R, S, T, N) of the switches (14) is carried out by means of a releasable coupling, for example via screws (20).

5. Board according to Claim 1, **characterized in that** the means (17) of releasable coupling between the tags (18) of the adapters (15) and the distribution bars (R, S, T, N) consist of a coulping configuration with geometrical uniting of the male and female type (R, S, T, N, 23), while the bars have for example a body or a rib for engagement and the ends (23) of the tags are configured as a clamp, or a groove (17) for releasable coupling to a respective distribution bar (R, S, T, N).

6. Board according to Claim 1, **characterized in that** the switch/adapter units (16) have at least one hand grip (45).

7. Board according to Claim 6, **characterized in that** two grips (45, 48) are provided, one on each lateral side of the adapter (15), in the mounted position.

8. Board according to Claim 7, **characterized in that** the grip (48), preferably located on the inside, can be removably fitted to the adapter (15).

9. Board according to Claim 8, **characterized in that** the removable grip (48) is made as a plate, **in that** in the adapter (15) end (50) of the plate there is provided, on one side, a springy longitudinal arm (51) with an engagement tooth (52) and, on the opposite side, an indentation (53), and **in that** in the adapter (15) there is provided a coupling seat with pocket (54) able to house under snap-action the coupling end (50) of the grip (48) and having correspondingly a projection (55) and a catch (56) co-operating respectively with the cavity (53) and the tooth (52) on the pivotable arm (51) of the grip (48).

10. Board according to Claim 1, **characterized in that** operatively associated with a safety mechanism (39) of the consumer switch (14) there is a diaphragm (40) moveable between a rest position, with the switch open, in which the diaphragm uncovers a screw (34) for fixing in the switch/adapter unit (16) to the insulating panel (12), and an active position, the switch closed, in which the diaphragm (40) blocks access to the aforementioned fastening screw (24).

## Patentansprüche

1. Niederspannungsverteilungsplatte umfassend in einem Plattenkörper (2) einen Hauptschalter (7), in einer Auflage (4) isolierte und unterstützte Verteilungsstäbe (R, S, T, N) und Verbraucherschalter (14), wobei eine eine Vielzahl von Öffnungen (13) zum Führen der Anschlüsse der Verbraucherschalter (14) zu den Verteilungsstäben (R, S, T, N) aufweisende isolierende Platte (12) mit der Auflage (4) verbunden wird, wobei die Auflage (4) Mittel (27, 28, 33) zur Befestigung des Schalters (14) aufweist,
**dadurch gekennzeichnet,**
**dass** ein Stützadapter (15) den einzelnen Verbraucherschaltern (14) zugeordnet ist und dadurch eine Schalter-/Adaptereinheit (16) bildet, und dass in den Adaptern (15) für jeden Pol (R, S, T, N) des Schalters (14) eine elektrisch leitende Kontaktfahne (18) vorgesehen ist, welche mit einem Ende an einen Pol (R, S, T, N) des Schalters (14) angeschlossen werden kann, durch den Körper des Adapters (15) geführt wird und danach heraus auf der anderen Seite (22) weg von dem Schalter (14) geführt wird und mittels einer auslösbaren Kopplung (17) bei einem entsprechenden Verteilungsstab (R, S, T, N) endet.

2. Platte nach Anspruch 1, **dadurch gekennzeichnet, dass** die in der isolierenden Platte (12) vorgesehenen Öffnungen (13) nach Art eines Retikels mit einem modularen Aufbau verteilt werden.

3. Platte nach Anspruch 1, **dadurch gekennzeichnet, dass** die Befestigungsmittel (27, 28, 33) für die Schalter-/Adaptereinheiten (16) aus zwei Reihen von in Seitenständern (28) vorgesehenen vertikalen Löchern (27) und eine Reihe von auf der vertikalen Mittellinie der isolierenden Auflage (4) vorgesehenen Löchern (33) bestehen, wobei Einsätze (30) zum Unterstützen der Schalter-/Adaptereinheiten (16) vorläufig in den Mittellöcher (33) fixierbar sind.

4. Platte nach Anspruch 1, **dadurch gekennzeichnet, dass** die Kontakte zwischen den Fahnen (18) der Adapter (15) und den entsprechenden Polen (R, S, T, N) der Schalter (14) mittels einer auslösbaren Kopplung, z.B. durch Schrauben (20), ausgeführt werden.

5. Platte nach Anspruch 1, **dadurch gekennzeichnet, dass** die Mittel (17) der auslösbaren Kopplung zwischen den Fahnen (18) der Adapter (15) und den Verteilungsstäben (R, S, T, N) aus einer Kopplungskonfiguration mit einer geometrischen Vereinigung von männlichen und weiblichen Typen (R, S, T, N, 23) bestehen, wobei die Stäbe z.B. einen Körper oder eine Rippe zur Kopplung haben, und die Enden (23) der Fahnen als eine Klammer oder eine Nute (17) für die auslösbare Kopplung mit einem entsprechenden Verteilungsstab (R, S, T, N) konfiguriert werden.

6. Platte nach Anspruch 1, **dadurch gekennzeichnet, dass** die Schalter-/Adaptereinheiten (16) mindestens einen Handgriff (45) besitzen.

7. Platte nach Anspruch 6, **dadurch gekennzeichnet, dass** zwei Griffe (45, 48) vorgesehen werden, ein Griff auf jeden lateralen Seite des Adapters (15) in der montierten Position.

8. Platte nach Anspruch 7, **dadurch gekennzeichnet, dass** der Griff (48), vorzugsweise auf der Innenseite angeordnet, entfernbar an dem Adapter (15) angebracht werden kann.

9. Platte nach Anspruch 8, **dadurch gekennzeichnet, dass** der entfernbare Griff (48) als eine Platte hergestellt wird, dass am Adapter(15)ende (50) der Platte auf einer Seite ein elastischer Längsarm (51) mit einem Kopplungszahn (52) und auf der gegenüberliegenden Seite ein Schnitt (53) vorgesehen werden, und dass in dem Adapter (15) ein Kopplungssitz mit einem Fach (54) vorgesehen wird, welches das Kopplungsende (50) des Griffs (48) durch Schnappen unterbringen kann und entsprechend einen Vorsprung (55) und einen Befestiger (56) hat, die jeweils mit der Höhlung (53) und dem Zahn (52) auf dem schwenkbaren Arm (51) des Griffs (48) zusammenwirken.

10. Platte nach Anspruch 1, **dadurch gekennzeichnet, dass** es mit einem Sicherheitsmechanismus (39) des Verbraucherschalters (14) verbunden eine Membran (40) gibt, die bewegbar ist zwischen einer Ruheposition mit offenem Schalter, in der die Membran eine Schraube (34) zur Befestigung der Schalter-/Adaptereinheit (16) an der isolierenden Platte (12), sichtbar macht, und einer aktiven Position mit geschlossenem Schalter, in der die Membran (40) den Zugang zur vorher erwähnten Befestigungsschraube (24) blockiert.

## Revendications

1. Panneau de distribution électrique basse tension comprenant, dans un corps de panneau (2), un interrupteur principal (7), des barres de distribution (R, S, T, N), isolées et supportées dans un panneau support (4), et des interrupteurs de consommateur (14), dans lequel,
associé au panneau support (4) est prévu un panneau d'isolation (12) comprenant une pluralité d'ouvertures (13) pour le passage des bornes des interrupteurs de consommateur (14) à travers les barres de distribution (R, S, T, N), tandis que ledit panneau support (4) comporte des moyens (27, 28, 33) pour fixer les interrupteurs (14),
**caractérisé en ce que** :
associé individuellement aux interrupteurs de consommateur (14) est prévu un adaptateur de support (15), chacun formant de cette manière une unité interrupteur/adaptateur (16),
et **en ce que** dans les adaptateurs (15) est prévu pour chaque pôle (R, S, T, N) de l'interrupteur (14), un bout de connexion (18) conductrice de l'électricité, pouvant être connecté, à une extrémité, à un pôle (R, S, T, N) de l'interrupteur (14), est conduit à travers le corps de l'adaptateur (15) et ensuite sorti sur l'autre côté (22) à l'écart de l'interrupteur (14) et s'achève en des moyens de couplage désolidarisable (17) à une barre de distribution (R, S, T, N) respective.

2. Panneau selon la revendication 1, **caractérisé en ce que** les ouvertures (13) prévues dans le panneau d'isolation (12) sont distribuées à la manière d'un réseau à schéma modulaire.

3. Panneau selon la revendication 1, **caractérisé en ce que** les moyens de fixation (27, 28, 33) pour les unités interrupteur/adaptateur (16) sont formées de deux séries de trous verticaux (27) prévus dans des montants latéraux (28) et d'une série de trous (33) prévus dans l'axe vertical du panneau support isolant (4), tandis que des inserts (30), prévus pour supporter des unités interrupteur/ adaptateur (16), sont susceptibles d'être fixés de façon préliminaire dans lesdits trous centraux (33).

4. Panneau selon la revendication 1, **caractérisé en ce que** la connexion entre les bouts (18) des adaptateurs (15) et les pôles (R, S, T, N) respectifs des interrupteurs (14) est effectuée au moyen d'un accouplement désolidarisable, par exemple via des vis (20).

5. Panneau selon la revendication 1, **caractérisé en ce que** les moyens (17) de couplage désolidarisable entre les bouts (18) des adaptateurs (15) et les barres de distribution (R, S, T, N) sont formés d'une configuration de couplage à réunification géométrique de type mâle et femelle (R, S, T, N, 23), tandis que les barres ont par exemple un corps ou une nervure devant venir en prise, et les extrémités (23) des bouts sont configurées sous la forme de pince ou attache, ou d'une gorge (17), pour l'accouplement désolidarisable à une barre de distribution (R, S, T, N) respective.

6. Panneau selon la revendication 1, **caractérisé en ce que** les unités interrupteur/adaptateur (16) ont au moins une prise manuelle (45).

7. Panneau selon la revendication 6, **caractérisé en ce que** deux prises (45, 48) sont prévues, l'une sur chaque côté latéral de l'adaptateur (15), en position montée.

8. Panneau selon la revendication 7, **caractérisé en ce que** la prise (48), de préférence placée à l'intérieur, peut être ajustée de façon amovible sur l'adaptateur (15).

9. Panneau selon la revendication 8, **caractérisé en ce que** la prise amovible (48) est réalisée sous la forme de plaque, **en ce que**, dans l'extrémité (50) de l'adaptateur (15) de la plaque, est prévu, sur un côté, un bras longitudinal (51) élastique avec une dent de mise en prise (52), et sur le côté opposé, une indentation (53), et **en ce que** dans l'adaptateur (15) est prévu un siège d'accouplement avec une poche (54) permettant de loger, par une action d'encliquetage, l'extrémité d'accouplement (50) de la prise (48) et ayant de manière correspondante une saillie (55) et un fermoir (56), coopérant respectivement avec la cavité (53) et la dent (52) sur le bras pivotant (51) de la prise (48).

10. Panneau selon la revendication 1, **caractérisé en ce qu'**un diaphragme (40), mobile entre une position de repos, l'interrupteur étant ouvert, dans laquelle le diaphragme découvre une vis (34) pour fixer l'unité interrupteur/ adaptateur (16) sur le panneau isolant (12), et une position active, l'interrupteur étant fermé, dans laquelle le diaphragme (40) bloque l'accès à la vis de fixation (24) mentionnée ci-dessus, est prévu fonctionnellement associé à un mécanisme de sécurité (39) de l'interrupteur de consommateur (14).
